# EUROPEAN PATENT SPECIFICATION

(11) **EP 3 736 144 B1**
(45) Date of publication and mention of the grant of the patent: **01.09.2021**
(21) Application number: 20173173.4
(22) Date of filing: 06.05.2020
(51) Int. Cl.: B60C 27/06, B60C 27/10

(54) **ANTI-SKID DEVICE WITH EXTERNAL MOUNTING FOR LARGE WHEELS**
GLEITSCHUTZVORRICHTUNG MIT AUSSENMONTAGE FÜR GROSSE RÄDER
DISPOSITIF ANTIDÉRAPAGE AVEC MONTAGE EXTERNE POUR GRANDES ROUES

(30) Priority: 09.05.2019 IT 201900006692
(43) Date of publication of application: 11.11.2020
(73) Proprietor: KÖNIG S.P.A, 23867 Suello (LC) (IT)
(72) Inventor: NECCHI, Stefano, 23874 Montevecchia (Lecco) (IT)
(74) Representative: Petruzziello, Aldo

(56) References cited:
- WO-A1-03/011618
- WO-A1-2019/074178
- US-A1- 2007 169 866

## Description

The present invention relates to an anti-skid device, commonly referred to as a snow chain, for large wheels, for example wheels of trucks, lorries, buses and the like, designed to be mounted from the side of the wheel turned towards the outside of the vehicle.

Externally mounted snow chains are known commercially, particularly for car wheels, therefore small in size, which comprise a central hub from which a plurality of arms or spokes protrude radially, connected to a terminal element that embraces the tread of the tyre. The terminal elements of the spokes are connected to chain segments that follow the tread of the tyre. In this way, the chain segments can scratch or score the sleet or ice on the road surface in order to exert more friction and prevent the tyres from slipping and skidding.

For the tensioning of this type of automotive snow chains, an adapter element is provided which is attached to a bolt or nut of the wheel. A tensioning belt or chain is attached to the adapter element, which is driven towards a tensioning/locking device, by means of which the belt and hence the snow chains are tensioned.

These externally mounted anti-skid devices for motor vehicles cannot be successfully used on truck or bus wheels because of the large size and shape of the latter, which normally have a strongly concave rim, wherein the supporting wall is at a certain depth in relation to the outer surface of the wheel.

Therefore, for these large wheels, which will be referred to here below for the sake of simplicity as bus wheels, classic steel mesh chains are used, which are extremely difficult to fit and require a certain skill on the part of the user.

WO 2019/074178 discloses a car snow chain comprising: a bracket detachably assembled with a centre portion of a wheel of a tyre; a disk which is disposed while being spaced apart from the bracket and is installed through an elongated hole of the centre portion; a connecting member elastically installed on a flange portion of the disk; and a slip-resistant member slidably installed at the connecting member and tightly fixed onto a tread of the tyre in a state where the length of the car snow chain can be adjusted. A nut is used to tighten the snow chain to the wheel. Hence a tool is necessary to provide the rotation of said nut.

WO 03/011618 A1 discloses a non-skid device for the wheels of vehicles, comprising a holding element situated in the region of the wheel axis and used with elastic holding arms holding a chain mesh. A tension cable is used to introduce tension forces into the holding arms. In order to introduce a defined tensile stress into the tension cable, said tension cable is connected to a pivotable tension lever.

The object of the present invention is to eliminate, or at least reduce, the disadvantages of the prior art illustrated above by providing a snow chain for external mounting that is practical and quick and easy to mount.

Another object of the invention is to provide such a snow chain that is versatile and designed to be applied to wheels wherein the support side is at different depths with respect to the outer surface.

Another object of the invention is to provide such a snow chain that is reliable and safe while the vehicle is in motion.

These and other objects are achieved by the snow chain according to the invention which has the features of the appended independent claim 1.

Advantageous embodiments of the invention are disclosed by the dependent claims.

Substantially, the anti-skid device with external mounting for large wheels, such as those of buses, lorries, trucks and the like, according to the invention, comprises:
a central body intended to be placed at the hub of a wheel on which the anti-skid device has to be mounted,
   - a plurality of arms protruding radially from said central body and ending in terminal elements intended to be placed on the tyre tread,
   - means placed between said central body of the anti-skid device and the rim of the wheel, designed to bring said central body closer to the hub of the wheel, and thus to tension the anti-skid device,
said means comprising an anchoring bracket which can be fixed to said rim and a tensioning device mounted in said central body of the anti-skid device, comprising a retractable rod engageable with said anchoring bracket, wherein
   - chain segments are connected to said terminal elements of the arms so as to form a ring on the tread of the tyre, and
   - a handwheel actuates the retractable rod in order to clamp the device closer to hub.

Further features of the invention will be made clearer by the detailed description that follows, referred to one of its embodiments merely by way of a non-limiting example, illustrated in the accompanying drawings, in which:

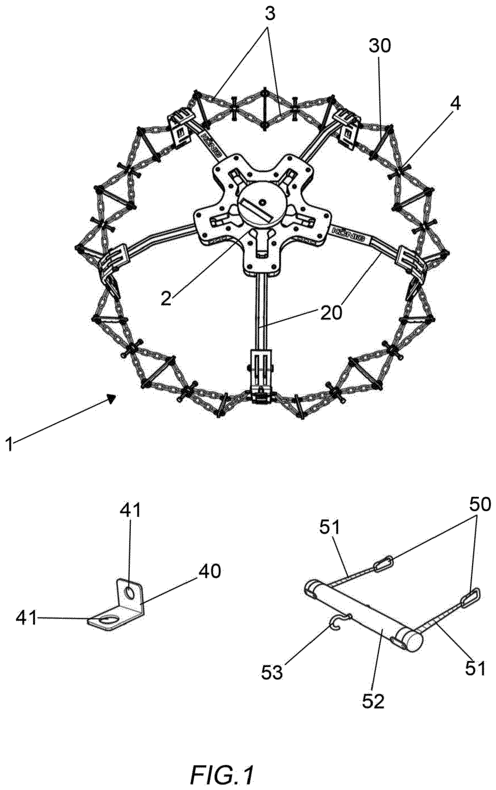

Figure 1 is a schematic blown-up view of the anti-skid device for large wheels according to the invention;
Figures 2 to 8 are schematic views illustrating successive stages of assembly of the anti-skid device of Figure 1;
Figures 3a, 3b; 6a, 6b; 7a, 7b are enlarged views of details of Figures 3, 6, 7, respectively, serving to better illustrate the respective phases of assembly;
Figure 9 is a schematic view in perspective of a wheel with the anti-skid device fitted;
Figures 10 to 14 are schematic views illustrating successive stages of disassembling of the anti-skid device;
Figures 12a,12b are enlarged views of details of Figure 12 serving to better illustrate the corresponding disassembly phase;
Figure 15 shows the section of a rim and how the anchoring bracket can be adjusted in such a way as to be placed at a distance L from the support side of the rim variable according to the dimensions inside the rim itself.

With the aid of the drawings, the tensioning device or snow chains according to the invention denoted overall by reference numeral 1 is described.

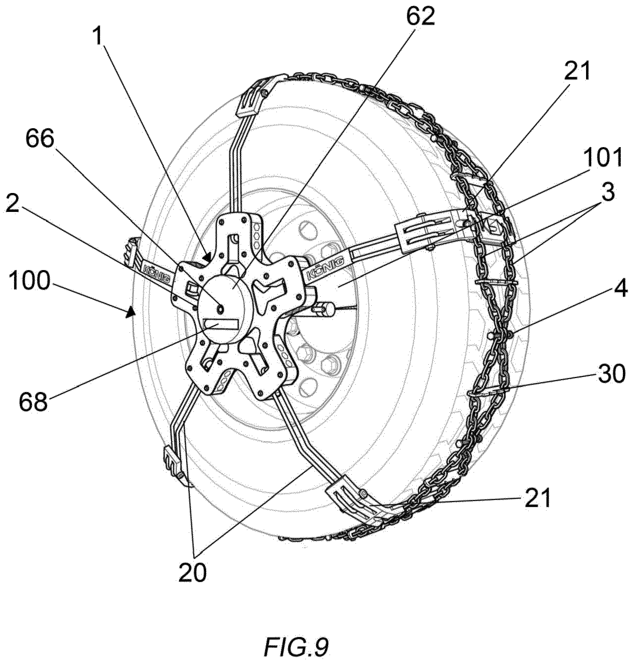

Figure 9 illustrates the anti-skid device 1 mounted on a wheel 100.

Device 1 comprises a hub or central body 2 intended to be placed at hub 101 of the wheel. From the central body 2 of the anti-skid device arms or spokes 20 branch off radially. Four arms 20, each consisting of a pair of appropriately shaped metal rods, are illustrated in the drawings.

The ends of the arms 20 are connected to respective terminal elements 21 bent with a radius of curvature that follows the edge of the tyre, in such a way that the terminal elements 21 can be arranged on the tread of the tyre of the wheel. Chain segments 3 are connected to the terminal elements 21 and are arranged in a ring along the tread of the tyre. By way of example, the drawing shows two chain segments 3 arranged substantially parallel one to the other. At appropriate intervals, the chain segments 3 are connected one to the other and maintained in position by transverse plates 30 which are arranged in a knife pattern on the tread of the tyre, in such a way as to improve the friction with the road surface, cutting into the ice or the snow.

Between at least some pairs of transverse plates 30 an adjustment device 4 is placed, in itself known, for adapting the chain segments 3 to slightly different wheel diameters or also to compensate tyre wear, which leads to a reduction in wheel diameter.

The anti-skid device comprises, as mounting accessories, a pair of L-shaped plates 40 provided with holes 41 on both wings of the L. One of these holes 41 is used to fix the plate 40 to rim 102 of the wheel by means of a corresponding fixing bolt 103 of the wheel.

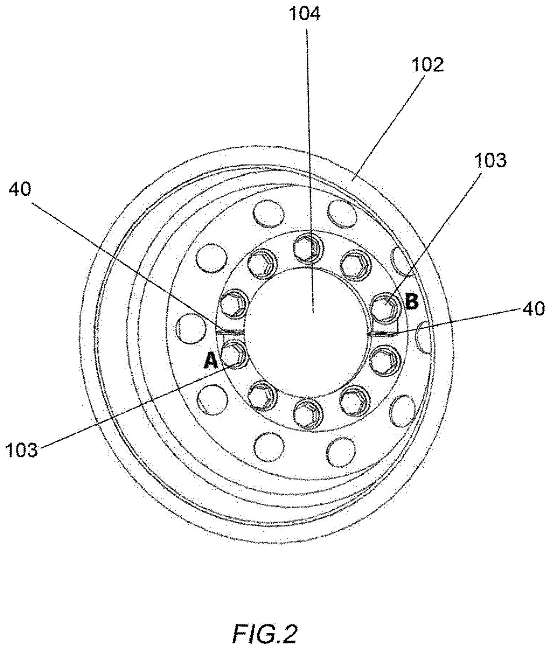

The pair of plates 40 are placed at two diametrically opposed wheel bolts 103, as shown in Figure 2.

At the other hole 41 of each plate 40, a respective snap hook 50 is fixed, restrained to a respective strap 51 carried by an anchoring bracket 52.

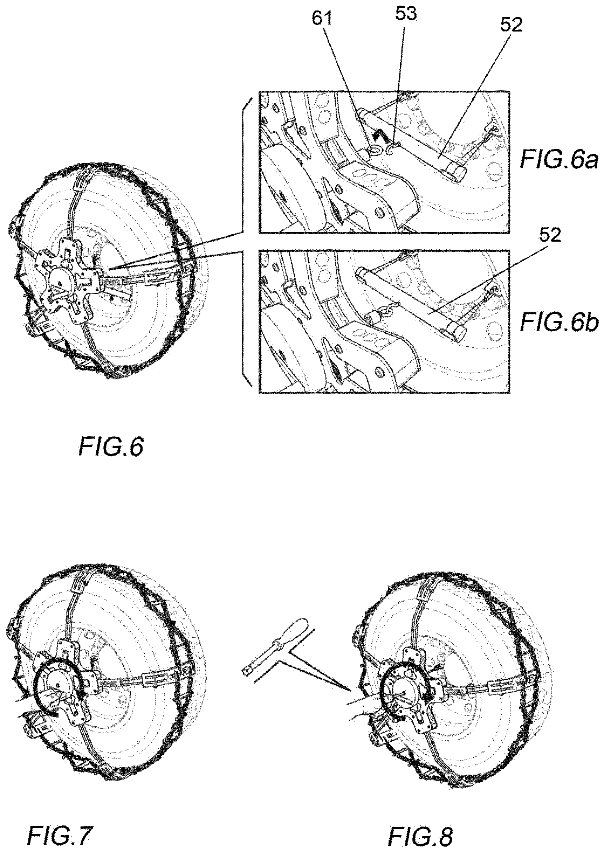

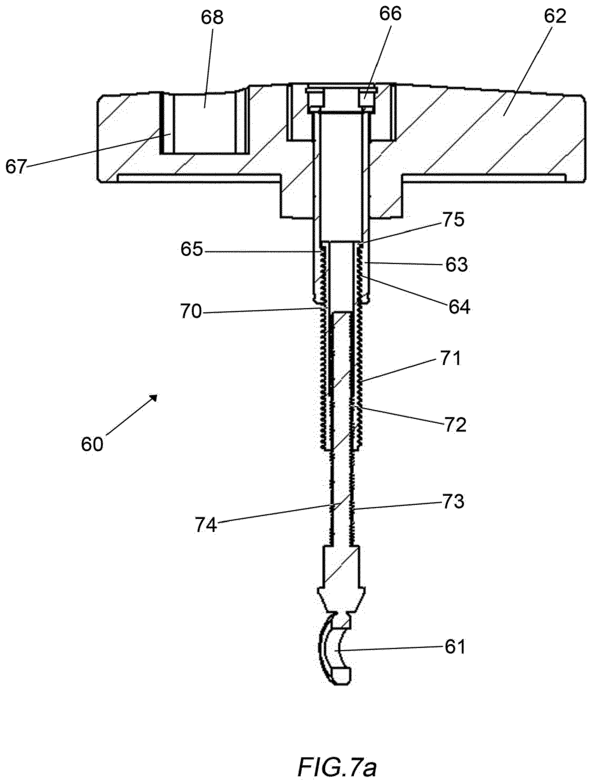

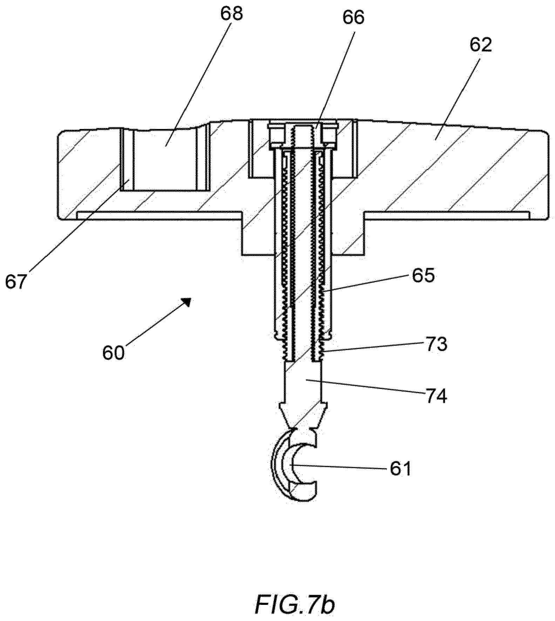

The anchoring bracket 52 carries a hook 53 with which an eyelet 61 of a tensioning device 60 provided in hub 2 of the anti-skid device can be engaged, which will now be described. Tensioning device 60 is shown in Figures 7a and 7b in two operating conditions and comprises a handwheel 62 housed in the central body 2 of the anti-skid device.

Handwheel 62 is integral centrally with a tubular sleeve 63 protruding internally from the handwheel and having an internal thread 64 in proximity of its free end, determining an internal shoulder 65.

The sleeve 63 houses a second tubular sleeve 70 provided with an external thread 71 and at least one internal thread 72 in proximity of its free end, with which engages the external thread 73 of a rod 74 housed in it and carrying at its free end said eyelet 61. In the handwheel 62 a nut 66 is also placed which is tightened after tensioning of the snow chain, to avoid accidental unscrewing, as will be stated here below.

In the handwheel 62 a seat 67 is also formed, suitable for housing a lever 68, which is lifted up for the actuation in rotation of the handwheel.

Mounting of the anti-skid device 1 according to the invention is described here below with reference to Figures 2 to 8.

Referring to Figure 2, the pair of plates 40 are first attached to rim 102 by unscrewing and re-screwing two diametrically opposed bolts 103.

Given the small size of the plates 40, they could be left on the wheel at least during the winter season.

The anchoring bracket 52 is then attached to the plates.

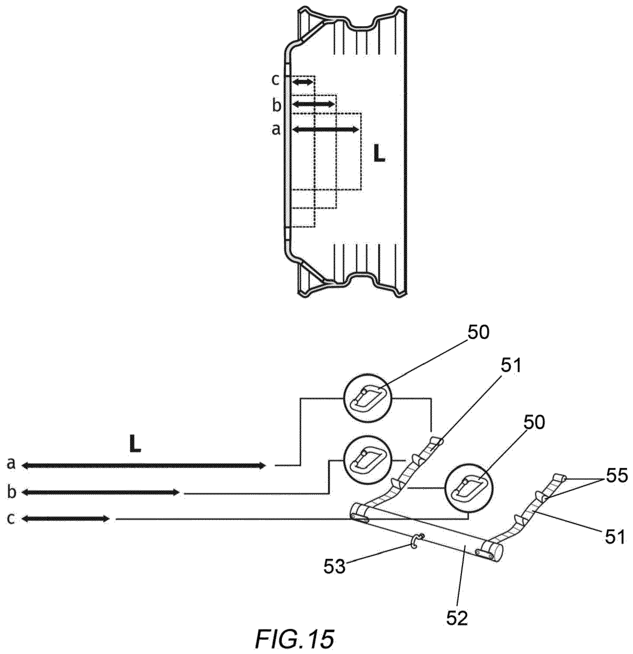

First of all, the snap hooks 50 are attached to the straps 51 in the most suitable position determined by the eyelets 55 provided on the same, according to the distance L at which the anchoring bracket 52 is to be placed from the bottom of the rim, as schematised in Figure 15.

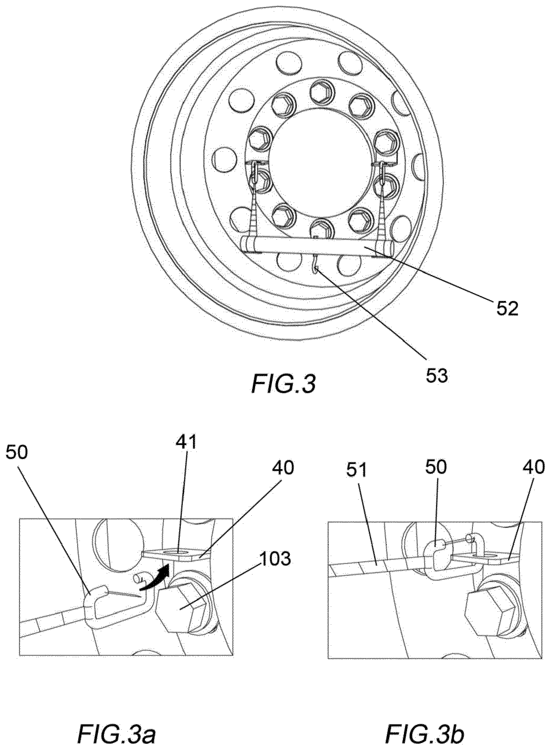

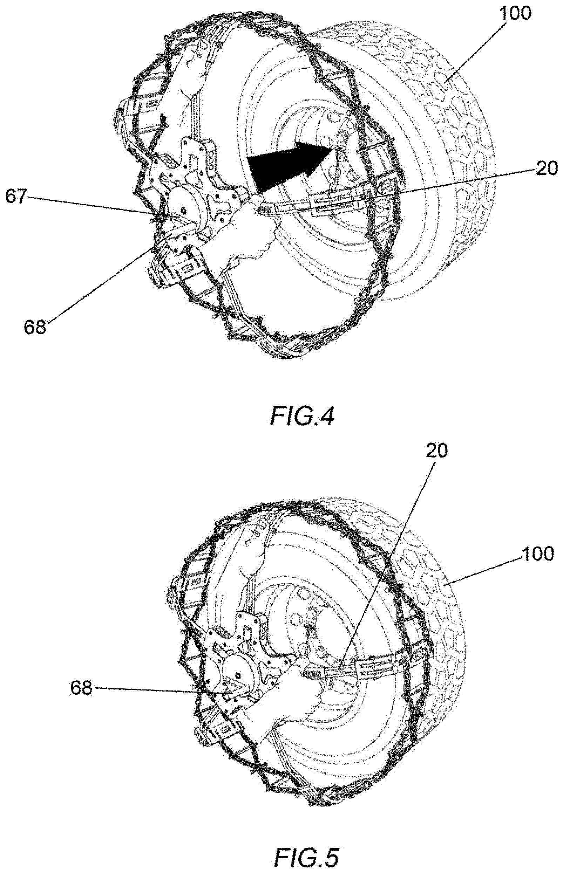

This operation may also be optionally carried out prior to the use of the anti-skid device. The snap hooks 50 are then attached to the plates 40, as shown in Figures 3a and 3b, in such a way that the anchoring bracket 52 is fixed to the wheel, as shown in Figure 3. At this point, the operator grasps two spokes 20 of the anti-skid device 1 to mount it from the outside of the wheel, placing the ring formed by the chain segments 3 on the tread of the tyre, as shown in Figures 4 and 5.

Subsequently the operator hooks the eyelet 61 of the tensioning device 60, which is in extended condition, to the hook 53 of the anchoring bracket 52, as shown in Figure 6, and more clearly in the enlargements of Figures 6a and 6b.

The operator then actuates the handwheel 62 in rotation, by means of lever 68, as shown in Figure 7, causing the central body 2 of the anti-skid device 1 to move towards the hub 101 of the wheel, and therefore tensioning in this way the terminal elements 21 of the arms 20 on the tyre.

The functioning of the handwheel 62 which determines the tensioning of the anti-skid device is illustrated in Figures 7a and 7b.

In Figure 7a the tensioning device 60 is in extended condition, with the rod 73 and the threaded sleeve 71 extended telescopically.

With the eyelet 61 hooked to the hook 53 of the anchoring bracket 52, the rod 73 is prevented from rotating. Therefore, a rotation of the handwheel 62 clockwise, as shown in Figure 7, initially produces a backward movement of the threaded sleeve 71, and with it of the rod 74, through engagement of the internal thread 64 of the sleeve 63 with the external thread 71 of the sleeve 70 and, when the latter reaches the end of the stroke, a further backward movement of the rod 74 through engagement of the internal thread 72 of the sleeve 70 with the external thread 73 of the rod 74, as shown in Figure 7b. When the desired degree of tensioning has been reached, the tensioning device 60 is locked by tightening the nut 66, as shown in Figure 8.

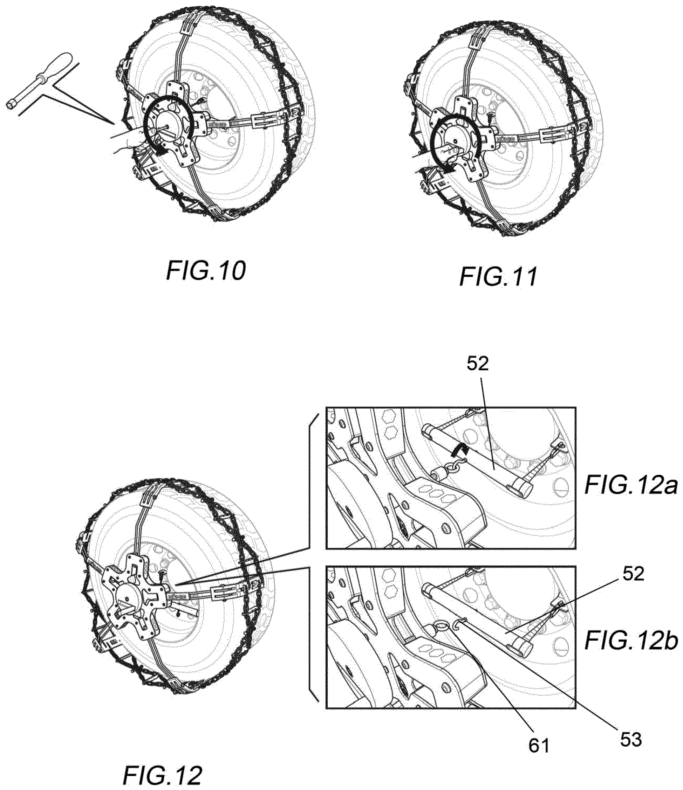

Here below, with reference to Figures 10 to 14, the disassembly of the anti-skid device 1 is described.

First of all, as shown in Figure 10, the tensioning device is unlocked by unscrewing the nut 66, then lever 68 lifts and handwheel 62 is actuated anticlockwise, as shown in Figure 11.

This rotation of the handwheel initially causes the exiting of the sleeve 70, until one of its annular end edges 75 abuts with the inner shoulder 65 of the outer sleeve 63, as shown in Figure 7a. The further rotation of the handwheel 62 causes the exiting of the rod 74 of sleeve 70.

After loosening, it is possible to release the eyelet 61 of the rod 74 from the hook 53 of the anchor bracket 52, as shown in Figures 12a and 12b.

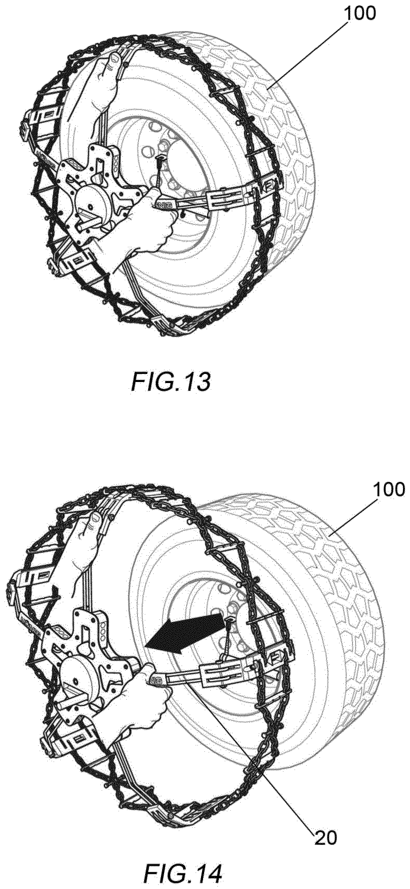

At this point the operator can grasp two spokes 20 of the anti-skid device 1 and remove it from the wheel, as shown in Figures 13 and 14, after which they can release the anchoring bar 22 from the rim of the wheel.

From what has been disclosed the advantages of the anti-skid device according to the invention appear clear, which allows easy and quick assembly and disassembly on large wheels and an effective tensioning, regardless of the depth of the bottom wall of the rim and the protrusion of the hub.

Naturally the invention is not limited to the particular embodiment previously described and illustrated in the accompanying drawings, but numerous detailed changes can be made thereto by the person skilled in the art, without thereby departing from the scope of the invention itself, as defined by the appended claims.

## Claims

1. Anti-skid device (1) with mounting from the outside for large wheels, such as those of buses, trucks, lorries and the like, comprising:
- a central body (2) intended to be placed at the hub (101) of a wheel (100) on which the anti-skid device has to be mounted,
- a plurality of arms (20) protruding radially from said central body (2) and ending in terminal elements (21) intended to be placed on the tyre tread,
- means placed between said central body of the anti-skid device and the rim (102) of the wheel, designed to bring said central body (2) closer to the hub (101) of the wheel, and thus to tension the anti-skid device,
said means comprising an anchoring bracket (52) which can be fixed to said rim (102) and a tensioning device (60) mounted in said central body (2) of the anti-skid device, comprising a retractable rod (74) engageable with said anchoring bracket (52), **characterised in that**
- chain segments (3) are connected to said terminal elements (21) of the arms (20) so as to form a ring on the tread of the tyre, and
- a handwheel (62) actuates the retractable rod (74) in order to clamp the device closer to hub (101).

2. Anti-skid device according to claim 1, wherein said retractable rod (74) is at least partially threaded externally (73) and housed in a sleeve (70) at least partially threaded internally (72) and externally (71), in turn housing in an outer sleeve (63), at least partially threaded internally (64).

3. Anti-skid device according to claim 2, wherein said rod (74) carries at the end an eyelet (61) which can be engaged in a hook (53) carried by said anchoring bracket (52), or vice versa, such that the rod (74) is prevented from rotating.

4. Anti-skid device according to any one of the preceding claims, wherein said anchoring bracket (52) can be hooked to a pair of plates (40) which can be fixed to respective bolts (103) for fixing of the wheel (100).

5. Anti-skid device according to claim 4, wherein the fixing of said anchoring bracket (52) to the plates (40) takes place by means of snap hooks (50) which can be mounted in different positions on respective belts, chains, cables, or the like, carried by said anchoring bracket (52).

6. Anti-skid device according to any one of claims 2 to 5, wherein centrally to said handwheel (62) a nut (66) is provided for locking the retractable rod (74) in a tensioned condition, to avoid accidental unscrewing.

7. Anti-skid device according to any one of the preceding claims, wherein on said handwheel (62) a seat (67) is formed, housing a hinged liftable lever (68) for the actuation in rotation of the handwheel.

## Patentansprüche

1. Gleitschutzvorrichtung (1) zur Montage von außen für große Räder, wie etwa von Bussen, Lastwagen, Schwerlastern und dergleichen, umfassend:
- einen zentralen Körper (2), der ausgelegt ist, um an der Nabe (101) eines Rads (100) platziert zu werden, auf dem die Gleitschutzvorrichtung montiert werden soll,
- mehrere Arme (20), die radial von dem zentralen Körper (2) vorstehen und in Abschlusselementen (21) enden, die ausgelegt sind, um auf der Reifenlauffläche platziert zu werden,
- Mittel, die zwischen dem zentralen Körper der Gleitschutzvorrichtung und der Felge (102) des Rads platziert sind, die ausgelegt sind, um den zentralen Körper (2) näher zu der Nabe (101) des Rads zu bringen und dadurch die Gleitschutzvorrichtung zu spannen,
wobei die Mittel eine Verankerungseinrichtung (52) umfassen, die an der Felge (102) befestigt werden kann, und eine Spannvorrichtung (60), die in dem zentralen Körper (2) der Gleitschutzvorrichtung montiert ist, welche eine einziehbare Stange (74) umfasst, die mit der Verankerungseinrichtung (52) in Eingriff bringbar ist,
**dadurch gekennzeichnet, dass**
- Kettensegmente (3) mit den Abschlusselementen (21) der Arme (20) verbunden sind, um einen Ring auf der Lauffläche des Reifens zu bilden, und
- ein Handrad (62), das die einziehbare Stange (74) betätigt, um die Vorrichtung näher zu der Nabe (101) zu klemmen.

2. Gleitschutzvorrichtung nach Anspruch 1, wobei die einziehbare Stange (74) zumindest teilweise mit einem Außengewinde (73) versehen und in einer Hülse (70) untergebracht ist, die zumindest teilweise mit einem Innengewinde (72) und einem Außengewinde (71) versehen ist und wiederum in einer äußeren Hülse (63) untergebracht ist, die zumindest teilweise mit einem Innengewinde (64) versehen ist.

3. Gleitschutzvorrichtung nach Anspruch 2, wobei die Stange (74) an dem Ende eine Öse (61) trägt, die mit einem Haken (53) in Eingriff gebracht werden kann, der durch die Verankerungseinrichtung (52) getragen ist, oder umgekehrt, sodass verhindert wird, dass sich die Stange (74) dreht.

4. Gleitschutzvorrichtung nach einem der vorhergehenden Ansprüche, wobei die Verankerungseinrichtung (52) mit einem Paar Platten (40) verhakt werden kann, die an jeweiligen Bolzen (103) befestigt sein können, um das Rad (100) zu befestigen.

5. Gleitschutzvorrichtung nach Anspruch 4, wobei das Befestigen der Verankerungseinrichtung (52) an den Platten (40) mittels Karabinerhaken (50) durchgeführt wird, die in unterschiedlichen Positionen auf jeweiligen Riemen, Ketten, Seilen oder dergleichen montiert sein können, die durch die Verankerungseinrichtung (52) getragen sind.

6. Gleitschutzvorrichtung nach einem der Ansprüche 2 bis 5, wobei zentral zu dem Handrad (62) eine Mutter (66) vorgesehen ist, um die einziehbare Stange (74) in einem gespannten Zustand zu verriegeln, um ein versehentliches Abschrauben zu vermeiden.

7. Gleitschutzvorrichtung nach einem der vorhergehenden Ansprüche, wobei auf dem Handrad (62) ein Sitz (67) gebildet ist, der einen über ein Scharnier verbundenen anhebbaren Hebel (68) für die Betätigung des Handrads zur Drehung unterbringt.

## Revendications

1. Dispositif antidérapage (1) avec montage extérieur pour des roues de grande taille, telles que celles des bus, des camions, des poids lourds et autres, comprenant :
- un corps central (2) destiné à être placé au niveau du moyeu (101) d'une roue (100) sur laquelle le dispositif antidérapage est censé être monté,
- une pluralité de bras (20) faisant saillie radialement à partir dudit corps central (2) et se terminant par des éléments terminaux (21) destinés à être placés sur la bande de roulement du pneumatique,
- des moyens placés entre ledit corps central du dispositif antidérapage et la jante (102) de la roue, conçus pour rapprocher ledit corps central (2) du moyeu (101) de la roue, et pour ainsi tendre le dispositif antidérapage,
lesdits moyens comprenant un support d'ancrage (52) apte à être fixé à ladite jante (102) et un dispositif de tension (60) monté dans ledit corps central (2) du dispositif antidérapage, comprenant une tige rétractable (74) apte à être engagée avec ledit support d'ancrage (52),
**caractérisé en ce que**
- des segments de chaîne (3) sont connectés auxdits éléments terminaux (21) des bras (20) de manière à former un anneau sur la bande de roulement du pneumatique, et
- une roue à main (62) actionne la tige rétractable (74) afin de serrer le dispositif plus près du moyeu (101).

2. Dispositif antidérapage selon la revendication 1, dans lequel ladite tige rétractable (74) est au moins partiellement filetée extérieurement (73) et logée dans un manchon (70) au moins partiellement fileté intérieurement (72) et extérieurement (71), à son tour logé dans un manchon extérieur (63), au moins partiellement fileté intérieurement (64).

3. Dispositif antidérapage selon la revendication 2, dans lequel ladite tige (74) porte un œillet (61) à l'extrémité, lequel peut être engagé dans un crochet (53) porté par ledit support d'ancrage (52), ou vice versa, de manière à empêcher la tige (74) de tourner.

4. Dispositif antidérapage selon l'une quelconque des revendications précédentes, dans lequel ledit support d'ancrage (52) peut être accroché à une paire de plaques (40) apte à être fixées à des boulons (103) respectifs pour la fixation de la roue (100).

5. Dispositif antidérapage selon la revendication 4, dans lequel la fixation du support d'ancrage (52) aux plaques (40) est effectuée au moyen de mousquetons (50) aptes à être montés à des positions différentes sur des courroies, chaînes, câbles ou autres respectifs, portés par ledit support d'ancrage (52).

6. Dispositif antidérapage selon l'une quelconque des revendications 2 à 5, dans lequel un écrou (66) est disposé au centre par rapport à ladite roue à main (62) pour bloquer la tige rétractable (74) dans un état tendu, afin d'éviter un dévissage accidentel.

7. Dispositif antidérapage selon l'une quelconque des revendications précédentes, dans lequel un siège (67) est formé sur ladite roue à main (62), logeant un levier soulevable articulé (68) pour l'actionnement de la roue à main en rotation.
